Europäisches Patentamt

European Patent Office

Office européen des brevets

(11) Publication number: 0 294 122 B1

# EUROPEAN PATENT SPECIFICATION

(45) Date of publication of patent specification: 27.01.93 (51) Int. Cl.⁵: G03B 21/62

(21) Application number: 88304863.9

(22) Date of filing: 27.05.88

(54) Display system utilising light transmitting screen and method of manufacturing same.

(30) Priority: 01.06.87 GB 8712798
09.06.87 GB 8713432
04.03.88 GB 8805218

(43) Date of publication of application:
07.12.88 Bulletin 88/49

(45) Publication of the grant of the patent:
27.01.93 Bulletin 93/04

(84) Designated Contracting States:
AT BE CH DE ES FR GB GR IT LI LU NL SE

(56) References cited:
FR-A- 750 155
FR-A- 2 309 893
US-A- 4 026 634
US-A- 4 298 246
US-A- 4 399 455

OPTICS COMMUNICATIONS, vol. 13, no. 1,
January 1975, pages 25-28; M.J. JEUDY et al.:
"Spectral photosensitization of a variable in-
dex material for recording phase holograms
with high efficiency"

P. HARIHARAN: "Optical holography", pages
107-108, 1984, Cambridge University Press,
London, GB;

(73) Proprietor: SCIENTIFIC APPLIED RESEARCH
(SAR) PLC.
27 Northolt Road, Harrow
Middlesex HA2 OLS(GB)

(72) Inventor: Johnson, William, Nevil, Heaton
19 St. Mary's Court
Stamford Brook Road, London W6(GB)
Inventor: Phillips, Nicholas J.
85 Byron Street,
Loughborough, Leicestershire(GB)
Inventor: Done, Steven
69, Beardsley Road,
Ouorn, Leicestershire LE12 8UX(GB)
Inventor: Donahogue Vincent
211 Westbourne Grove,
London W11(GB)
Inventor: Murray, Bruce Lawrence John
Clayton Castle, Underhill Lane
Clayton Hassocks, West Sussex(GB)

(74) Representative: Howden, Christopher Andrew
et al
FORRESTER & BOEHMERT Franz-
Joseph-Strasse 38
W-8000 München 40(DE)

APPLIED OPTICS, vol. 14, no. 3, March 1975, pages 593-601; B.L. BOOTH: "Photopolymer material for holography"

E. HECHT et al.: "OPTICS", pages 483-484, 1974, Addison-Wesley Publishing Co., Reading, Massachusetts, US;

R.W. DITCHBURN: "Light", 3rd edition, pages 152-154, 1976, Academic Press, London, GB;

**Description**

THIS INVENTION relates to a display system, utilising a light-transmitting back projection screen, for a television receiver, video monitor, VDU or the like.

In the interests of reduction in size, weight and volume of television receivers, there has been increasing interest in the use of liquid crystal displays, in place of the conventional cathode ray tubes, for television screens. Indeed, various miniature television receivers have been successfully produced utilising LCD screens. However, to date it has not been possible to produce commercially television screens of more than about 5 inches diagonal in the form of liquid crystal displays.

Furthermore, there has been recent interest in the use of back-projection screens in conjunction with c.r.t.-type television displays, in order to afford viewing screens which are substantially larger than the largest c.r.t.-type television picture tubes which are practicable.

US-A-4026634 discloses a light transmitting screen comprising an array of converging lenses and which may form a transmission-type projection screen onto which the image of a slide may be projected by a slide projector. The individual lenses are formed by forming the surfaces of a transparent plate with respective convex bumps or, in a variant, by packing together, side by side, a plurality of short glass fibres, each of which forms a respective graded refractive index lens.

FR-A-750155 discloses a stereoscopic projection system in which a transmission type lenticular screen, incorporating an array of plano-convex lenses, is illuminated, by two projectors, from different angles, these projectors projecting onto the screen the left-eye and right-eye components respectively of a stereoscopic image. The effect of the screen is said to be such that, at each of a plurality of viewing positions on the opposite side of the screen from the projectors, light from the screen, corresponding to one of the components of the stereoscopic image, arrives from a slightly different angle from the light corresponding to the other of said image components, resulting in a stereoscopic impression for the viewer disposed at such a viewing position.

It is an object of the present invention to provide a means whereby the apparent size of a liquid crystal display screen or of a conventional c.r.t. screen may be increased whilst avoiding the technical problems inherent in constructing a liquid crystal display or c.r.t. picture tube of corresponding size and without adding to the size, weight or complexity of the apparatus as a whole to an unacceptable extent, and thereby to provide an improved display system.

According to one aspect of the invention, there is provided a display system comprising an object screen, an image screen and a projection system arranged to project an image of the object screen onto the image screen, the image screen comprising an array of graded refractive index lenses, characterised in that said image screen comprises an integral sheet of a transparent photopolymer with each of said lenses being formed by a respective region of said sheet extending between the surfaces of the sheet with the refractive index, in said region varying gradually with radial distance from the optical axis of each of said lenses.

A preferred method of making the rear projection image screen comprises applying a layer of a photopolymerisable monomer to a substrate and selectively exposing said layer to ultraviolet light at each of an array of spots over the surface of the layer to cause the monomer to polymerise selectively in such a way as to afford said graded refractive index lenses in a corresponding array, and thereafter subjecting the photopolymer layer to a blanketing exposure to ultraviolet light.

The display system may be a three-dimensional display system, the system including two said object screens each serving as a source of a respective one of two optical images, said projection system being arranged to direct light from said object screens to said sheet, the arrangement being such that when said screen is viewed by a person having binocular vision, having his eyes located in predetermined positions or angular orientations with respect to said array, one eye receives light from a first set of said graded refractive index lenses, constituted by every other said lens in said array, whilst the other eye receives light from a second, complementary set of graded refractive index lenses, made up by the remaining lenses in the array, the arrangement being such that each eye in consequence perceives a respective one of said two images, within the limits of said screen, whereby, when said two images correspond with the respective images of a three dimensional scene which would be perceived by the two eyes of the person viewing that scene, the person viewing the sheet bearing the array of graded refractive index lenses perceives a corresponding three dimensional image in the region of the array.

In such a three-dimensional system, the light-transmitting sheet is preferably so formed that each lens combines the effect of a simple converging lens and a thin prism, so that successive lenses are arranged to deflect the light passing therethrough to left and to right.

The techniques described using photopolymer involve essentially volumetric changes in refractive index of the recording material.

The method described of forming a screen comprising a lens array using a photopolymer, utilises a volumetric effect to produce substantially tubular graded refractive index lenses. In the various embodiments of the invention to be described these lenses are individually of very small physical size and are, for convenience, referred to herein as "microlenses". Preferably the microlenses formed are orientated so as to control the arrival of light in the direction required by the viewer's eye. Thus it is proposed to overcome the problems of directionality of a rear projection screen which cause the effect of a central "hot spot" when viewing a magnified image from a small source. Such directional control may be attained by the adjustment of recording ray directions using a laser source in the manufacture of the screen.

As noted above, any other appropriate technique may be used to produce the microlens screen, for example using optical imaging techniques, electron beam techniques or the like.

Preferably, the display facility comprises a high-resolution liquid crystal display forming the screen of an associated television receiver, video monitor, VDU or the like. Alternatively, the display facility may comprise a bright c.r.t. display tube of relatively small size compared with those utilised in conventional domestic television receivers. For convenience of description, however, in what follows, the screen of display facility on which the optical image originates is referred to as the "LCD screen" to distinguish it from the microlens screen. Spaced in front of the LCD screen by a distance of several inches, for example, but not necessarily in a parallel plane, having regard to the light-folding techniques which may be used (see below), is the aforesaid screen bearing said array of microlenses or lenslets. This screen, in conjunction with the microlens array thereon, is herein referred to, for convenience, as the microlens screen. Interposed between the LCD screen and the microlens screen is an optical system which forms a real image of the LCD screen substantially in the plane of the microlens screen. The optical system preferably utilises light folding techniques, for example incorporating mirrors or internally reflecting prisms or the like, in order effectively to place the microlens screen at a substantially greater apparent distance from the LCD screen, from an optical viewpoint, than its physical distance, having regard to the desired limited physical spacing between the LCD screen and the microlens screen. Thus, for example, the arrangement may be such that, with an LCD screen of 3 inches diagonal dimension, and a spacing of 3 inches behind the microlens screen, the image perceived by the viewer corresponds in apparent size with an image of the LCD screen, in the plane of the microlens screen, which has a diagonal dimension of 13 inches.

The function of the microlens screen is similar to that of a back-projection screen of translucent material, such as ground glass, such as used in certain cinematographic techniques or to the focussing screen of a reflex camera. In these known arrangements, each portion of the translucent screen actually scatters light in all directions and also transmits therethrough, substantially unscattered, a larger portion of the light falling on that portion, resulting in the well-known "vignetting" or "hot spot" effect, i.e. a falling off in perceived intensity of illumination of the image from the centre towards the edges of the screen. Furthermore these known arrangements have the additional disadvantage that a substantial proportion of the light forming the image is scattered in directions from which there is no requirement that the image should be viewable, so that light is wasted. Furthermore, there is, in such conventional arrangements, a certain blossoming or fuzziness in the image on the screen. These defects would be significant if such a conventional translucent screen were utilised, in conjunction with a back-projection technique, to provide an enlarged image of a LCD screen of a television receiver or the like. These defects may be avoided in the display system embodying the invention by appropriate configuration of the microlens array.

Thus, the arrangement may be such that to an observer of the screen located within a relatively narrow viewing sector with respect to the screen, for an image, on the LCD screen, which is of uniform brightness over the width and height of the LCD screen, the corresponding image formed in the plane of the microlens screen is of uniform brightness across the width and height of the microlens screen whereas a negligible amount of light passes from the microlens screen to locations outside said viewing sector. The arrangement may be such that, at a normal viewing distance from the microlens screen, having regard to the size of the image thereon, the width and height of the viewing sector may be no more than a foot or two.

The principles underlying the invention, and features of preferred embodiments, are discussed below in more detail with reference to the accompanying drawings wherein:-

FIGURE 1 is a schematic diagram illustrating a conventional rear-projection display system using a diffusion screen as a rear-projection screen,

FIGURE 2 is a schematic diagram illustrating how a corresponding effect may be obtained using a rear-projection screen comprising a microlens array;

FIGURE 3 is a schematic diagram illustrating exposure of a surface to light through an apertured mask;

FIGURE 4 is a graph, related to Figure 3, illustrating the variation in intensity of illumination of the surface due to diffraction, which may be utilised in manufacturing a system embodying the invention;

FIGURE 5 is a schematic diagram illustrating exposure of a surface to light adjoining the edge of an opaque layer;

FIGURE 6 is a diagram, similar to Figure 5, illustrating variation in illumination, under an opaque bar, of a surface illuminated by light partly intercepted by said bar;

FIGURE 7 is a graph illustrating variation in refractive index with exposure, leading to polymerisation, of a polymer;

FIGURE 8 is a diagram illustrating the configuration of a graded refractive index lens;

FIGURE 9 shows a variety of imaging conditions for graded refractive index lens;

FIGURE 10 illustrates the concept of the acceptance angle, as applied to a graded refractive index lens;

FIGURE 11 is a diagram illustrating the manufacture of a microlens screen for a display embodying the invention;

FIGURE 12 is a diagram illustrating how graded refractive index lenses may be also arranged to act as light pipes, to secure net deflection of light in a display embodying the invention;

FIGURE 13 is a diagram illustrating a rear projection screen comprising two active layers.

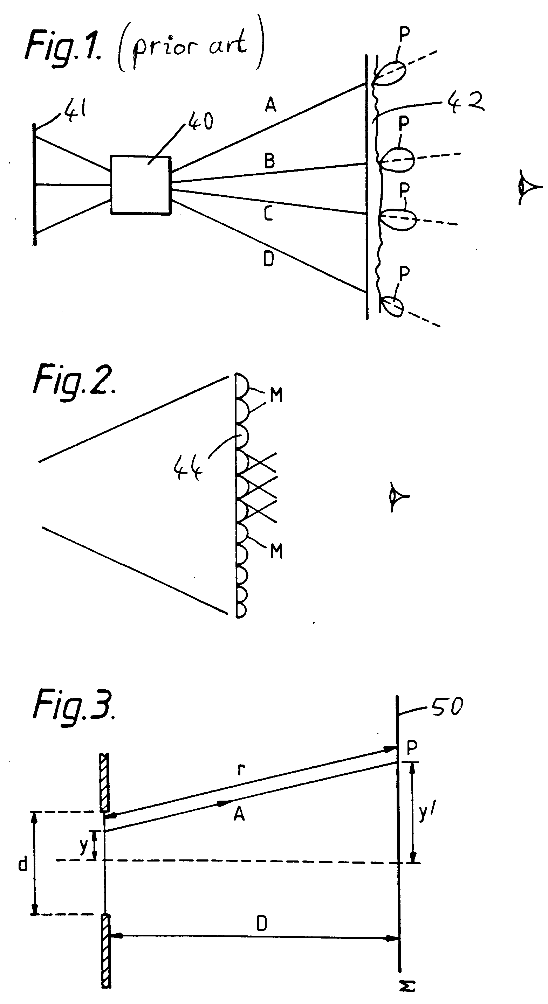

By way of illustration, and referring to Figure 1, there is illustrated schematically an imaging system 40 projecting a real image of an object screen 41, such as a television picture tube, onto a conventional diffusion screen 42, such as a ground glass screen. For any light ray, such as illustrated at A, B, C and D, incident upon the screen, there emerges, from the other side of the screen, a bundle of scattered rays. Indicated at P for each ray A, B, C, and D is a respective polar distribution of the relative intensity of light from the diffusion screen at various angles with respect to the axis of the original ray A, B, C or D at the point of emergence of the scattered ray. The observer sees mainly the central radiation which undergoes a narrow diffusion angle, thus he experiences a visual "hot spot" in the central part of the image. This central "hot spot" is characteristic of simplistic diffusers of the ground glass type.

Figure 2 illustrates, for comparison, the situation where the conventional diffusion screen of Figure 1 is replaced by a screen 44 bearing an array of microlenses M. Each microlens M brings the incident light to a focus near the plane of the array. Thus the observer sees the array as a diffusing surface. Such an arrangement may be used to afford a television display system where an optical system forms, on the microlens screen, the real enlarged image of an LCD or c.r.t. television picture screen.

It will be appreciated that individual microlenses in the array may, according to location, be so formed as to combine the effect of a thin prism and a lens proper, and the use of the terms "microlens" and "lenslet" herein is intended broadly so as to cover such effective combinations.

It will be appreciated that the microlens screen extends over the desired apparent area of the screen, for example over an area 13 inches square where it is desired that the television screen should appear, to the viewer, to be 13 inches square. The display facility is so contrived that, in operation, the LCD screen is, from the onlooker's viewpoint, effectively mapped to a larger scale, onto the sheet bearing the microlens array, so that each point (or rather pixel) on the screen gives rise to the perception of a corresponding point (or rather enlarged pixel) at a corresponding location in the region of the microlens screen, so that the onlooker sees an enlarged LCD screen.

The techniques described permit the arrangement of the microlenses to provide a regular positional arrangement of the elements. A totally regular array does not introduce any granularity (which may be regarded as a species of visual "noise") into the perceived image. Reduced "granularity" due to regularisation of the lenslet positions leads to a marked improvement in noise and definition of such a projected image and a display system embodying the invention has, from the point of view of the viewer the advantages of providing a brilliant image of uniform brightness across the viewed screen, which image is nevertheless sharp and clear. However, excessive regularity may lead to diffraction effects due to the fabrication of what is in effect a two-dimensional low frequency diffraction grating. (It is also possible that excessive regularity may produce Moire effects particularly with colour TV). Diffraction and Moire problems can be avoided by the injection of a controlled amount of randomness in what would otherwise be a totally regular array. It is also possible to provide the microlens screen with a relief image "moth-eye" surface as an adjunct to the microlens array, thus permitting greatly reduced stray light reflection from the screen.

Some methods of producing a microlens screen for use in a display system embodying the invention are discussed below in greater detail.

In the methods considered below photographic or analogous techniques are used in the production of a microlens screen.

Two approaches have been considered, the first being aimed at producing ultimately a transparent sheet having on one surface thereof an array of convex circular areas forming the lenses. This approach is referred to herein as the relief image approach. This approach may utilise techniques, known per se, in which a photo-resist layer, on a support, is selectively exposed to light through a screen of some sort. The second approach considered involves the use of a variable refractive material to produce the microlenses as effectively tubular or cylindrical lenses with their axes extending perpendicular to or nearly perpendicular to the plane of the microlens screens. The nature and characteristics of such lenses are discussed in more detail below. This approach may utilise a technique involving exposure of a photopolymer selectively, again through a screen of some sort. In both of the approaches considered, an important feature is the provision, in a manner readily implemented, of a predetermined variation of light exposure over the area which is to correspond to each microlens array, in the photographic or quasi-photographic technique involved.

Polymeric materials exhibiting variable refractive index are known per se and are referred to herein as photopolymers. Thus, for example, it is known that polymerisation of an acrylamide monomer can be promoted by exposure to light, for example laser light. Thus, for example, it is known to produce holograms in photopolymers by exposing a layer, consisting of a corresponding monomer dispersed in a suitable binder and applied as a coating to a substrate, the degree of polymerisation of the monomer being dependent on the light intensity in the coating. As a refractive index of the material varies with the degree of polymerisation, localised variations in refractive index can be produced on a controlled basis by control of localised variation in illumination during exposure. One known material of this character is based on an acrylamide monomer. Polymerisation of the monomer may be promoted by exposure to ultraviolet light, for example UV laser light, or by incorporating in the monomer coating a bleachable sensitizer rendering the monomer polymerisable by visible light of a wavelength produced by an available visible light laser or other high intensity source, the sensitiser being subsequently bleached out by a bleaching step following polymerisation, or, as disclosed in the article "Spectral Photosensitization of a Variable Index Material for Recording Phase Holograms with High Efficiency" by M.J. Jeudy and J.J. Robillard ("Optics Communications" - Volume 13, No. 1 - January 1975) by incorporating in the monomer coating a photochromic sensitizer which can be temporarily activated, by exposure to ultra-violet light, so as to be temporarily absorbent to light of a wavelength in the visible spectrum and simultaneously selectively exposing the coating to light, such as laser light, of that wavelength. Thus, for example, the variable refractive index material used may be produced, as disclosed in the above-noted reference, in the form of a film comprising (prior to exposure) acrylamide monomer, a polyvinyl alcohol binder, triethanolamine as a promoter and indolinospiropyran as a photochromic sensitizer.

It is contemplated, as discussed below, that, provided certain conditions are observed, the necessary gradation of exposure of the respective photosensitive material over the area of each lens, may be achieved using diffraction effects associated with a screen of very simple form. Thus, for example, a screen comprising effectively a clear screen carrying in a regular array, a plurality of circular, completely opaque dots may be used, or conversely, an opaque screen having an array of circular, clear holes.

If we examine the diffracted light from a clear aperture then we can see that limitations due to diffraction may well dominate the effectiveness of the method however.

Referring to Figure 3, let $y'$ be a coordinate on the imaging screen 50 and $y$ be a coordinate in the aperture. Considering the diffracted amplitude at P, and noting that $r^2 = (y' - y)^2 + D^2$, the total diffracted amplitude at P given as

$$\int_{-\frac{d}{2}}^{+\frac{d}{2}} \frac{A\, e^{ikr}}{r}\, dy$$

$k = 2\pi/\lambda_a$ where $\lambda_a$ is the wavelength in air of the incident light.

The evaluation of the integral is notoriously difficult but the usual approximation, to remove 1/r outside the integral is easy to justify. More difficult is the approximation to the exponent kr. Usually the far-field approximation ($D \gg y, y', d$) is used but this may not be sufficiently accurate.

First consider the normal far-field approach we approximate thus

$$r \approx D \left[ 1 + \frac{1}{2} \frac{(y' - y)^2}{D^2} \right]$$

Normally, an imaging lens would be used to collect the light diffracted by the aperture.

This effectively introduces a phase shift of the form $\exp(-iky^2/2f')$ where f' is the focal length of the lens. If we choose D = f' then conveniently, the quadratic term in y in the phase factor kr is cancelled. Thus the integral for the amplitude at P becomes

$$\int A e^{ikr} \cdot e^{-iky^2/2f'} dy.$$

This integral is now amenable to calculation thus:

$$\int_{-\frac{d}{2}}^{+\frac{d}{2}} A e^{ikr + iky^2/2f'} dy$$

$$= A e^{ikD + iky'^2/2D} \int_{-\frac{d}{2}}^{+\frac{d}{2}} e^{\frac{iky^2}{2} \left[ \frac{1}{D} - \frac{1}{f'} \right]} \cdot e^{\frac{-ikyy'}{D}} dy$$

Note that if D = f' then the awkward quadratic part of the exponent disappears and we have a total diffracted amplitude at P of the form

$$A e^{i\phi} \int_{-\frac{d}{2}}^{+\frac{d}{2}} e^{\frac{-ikyy'}{D}} \cdot dy$$

where $\phi = kD + ky'^2/2D$
This leads to the result

$$\frac{Ade^{i\phi}}{2} \; sinc \; \left[\frac{kdy'}{2D}\right]$$

where sinc $Z = \sin Z/Z$

The intensity is then proportion to

Amplitude x Amplitude[*]

where * refers to the complex conjugate. When the multiplication is performed then the ø dependent term disappears and the intensity is proportional to

$sinc^2 \; (kdy'/2D)$

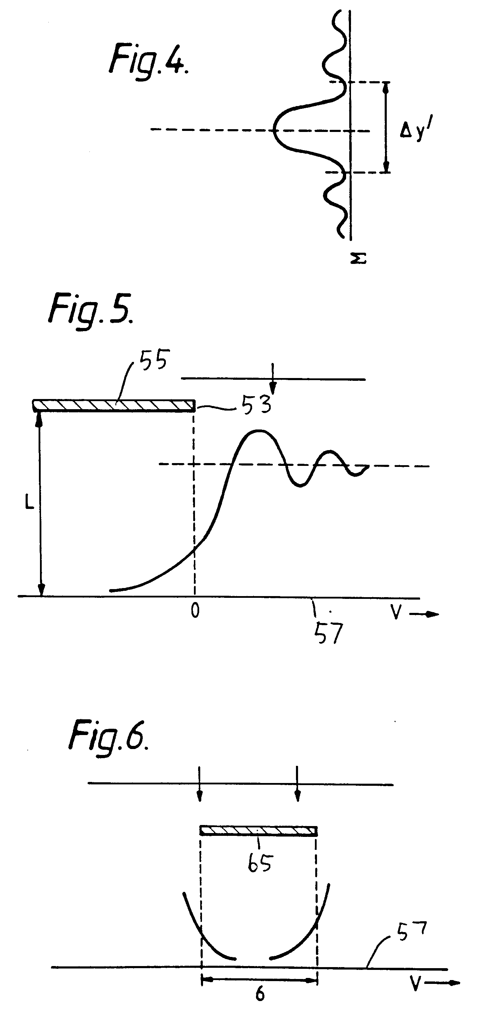

This can be represented as shown in Figure 4 showing the typical Fraunhofer diffraction of a slit. Figure 4 is a graph of light intensity (X-axis) against position (Y-axis).

The width of the central peak is given by

$$kd\Delta y'/2D = 2\pi \quad or \quad \Delta y' = \frac{2D \lambda_a}{d}$$

Though strictly the result should not be applied to the near field case, we can see that for $\Delta y' \approx d$ then we must have $d^2 \approx 2D \lambda_a$ which is an approximate condition for a constraint of the diffraction pattern to lie within the geometrical shadow.

Let us try some numbers. Suppose that $\lambda_a = 0.5\mu$. Set e.g. $D = 100\mu$ then a slit of width $d \approx \sqrt{2 \; .100. \; 0.5} \approx 10\mu$ should create a consistent result. This calculation may help to give a guideline in terms of minimum slit width required to give a diffraction pattern localised to within a sort of geometrical shadow. Clearly this calculation is not accurate in a rigorous sense since it applies far-field theory in dubious circumstances.

Thus in fact, we need a more rigorous theory of short range diffraction to account for the possible behaviour of the system. This introduces us to the use of Fresnel's theory of diffraction as distinct from the Fraunhofer case so far studied.

In fact, the Fresnel approximately is still only a partially exact guide to the truth but it is a much more rigorous approach than that already used. The successive approach to accuracy is simply achieved by the inclusion of extra terms in the expansion for r the radius factor. Remember that we conveniently eliminated $y^2$ in the previous case by the artifice of the introduction of a lens. Let us now leave out the lens and address the problem of Fresnel diffraction at an edge as illustrated in Figure 5 showing Fresnel diffraction at an edge 53 of an opaque screen 55 disposed a distance L above a receiving surface 57, the light being incident downwardly on the surface 57 and screen 55, the curve being a graph showing the variation in light intensity (y-axis) at surface 57 with horizontal position on surface 57 relative to edge 53.

Note that the intensity at the observation plane does not fall off sharply into the geometrical shadow. At the edge of the "shadow" the intensity is one quarter of the unobstructed value and rises 1.37 of the unobstructed value, (represented by the horizontal broken line), just outside the edge of the shadow (represented by the vertical broken line). The variable is defined by the equation

$$v = y \sqrt{\frac{2}{\lambda_a L}}$$

where y is the actual length coordinate in the observation plane. The pattern has virtually died out in the shadow where v ≈ -3 which allows us to scale the problem in a crude way. Thus we might expect to require that an opaque line as shown below be of length v ≈ 6 in order that the edge effects are independent. Figure 6 is a diagram similar to Figure 5 but shows gradation of illumination behind an opaque bar 65. With a sufficient length of opaque bar, there is a significant geometrical shadow zone.

Choose say L = 100μ as before λ = 0.5μ and we have

$$y = 6 \sqrt{\frac{50}{2}} \quad \text{or } y \approx 30\mu$$

Much depends on the precise sensitometric characteristics of the recording medium. Thus an exposure "threshold" means that edge enhancement can be expected. In the technique using a variable refractive index photopolymer, the real time properties of the photopolymer may be important. Thus, it is possible that a highlight of the Fresnel diffraction pattern will attract more light into it during recording.

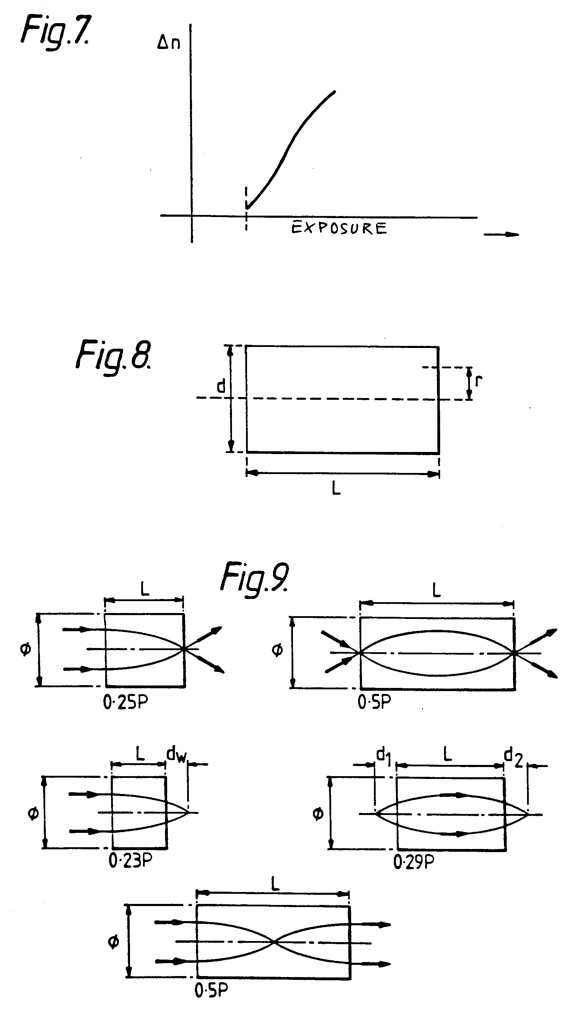

Figure 7 shows a hypothetical Δn (y-axis) versus exposure (x-axis) plot for a photopolymer. The threshold energy represented by the vertical broken line means that nothing happens below this level of exposure.

This modelling and that used previously in the Fraunhofer case leads to the conclusion that somewhere between 10 and 30 microns is an appropriate obstruction or hole size for a distance factor of 100μ. The generalisation to cylindrical symmetry for a circular dot is not seen as producing a dramatic change of numbers.

If we can achieve better proximity than 100μ then smaller obstruction sizes can be accommodated. We conclude that optical exposure through an aperture can for sufficiently large apertures or sufficiently small wavelengths create an illumination pattern of a similar size.

Considering now in greater detail the technique using variable refractive index photopolymer, the discussion below illustrates how the considerations above can be applied to the production of GRIN lenses using variable exposure on a medium that exhibits a change of refractive index on exposure to light. Let us first look at a conventional GRIN (graded refractive index) lens.

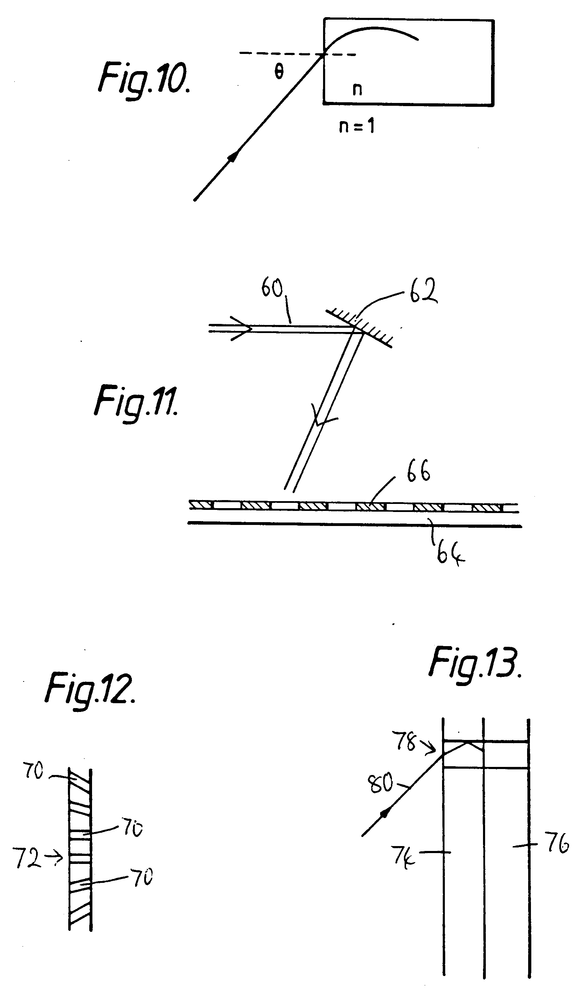

Figure 8 shows a typical GRIN lens structure.

The parameters of a GRIN lens are specified thus:

The refractive index is engineered conventionally to be parabolic with r. Thus

$$n_r = n_{oo} \left[ 1 - \frac{A}{2} r^2 \right]$$

Here $n_{oo}$ is the refractive index on the optical axis and A is a positive constant. Note that the refractive index <u>decreases</u> with r, thus to simulate the effect with a photopolymer will require a clear hole screen, <u>not a black dot</u> screen, in a contact recording situation.

We define the pitch P as follows:

$$P = 2\pi / \sqrt{A}$$

If we know the pitch we can define various imaging characteristics by vary the length of the lens.

Figure 9 shows a variety of imaging conditions for GRIN lenses.

In the case considered in which an array of such lenses is formed in a layer of photopolymer, varying the length of each GRIN lens would correspond to varying the thickness of the imaging medium. Looking at the diagrams, we probably want to specify L = 0.25P. Defining $r_{max}$ as d/2 where d is the diameter of the lens we then have

$$n_{edge} = n_{axis} \left[ 1 - \frac{Ad^2}{8} \right]$$

Now let us define $\Delta n = n_{axis} - n_{edge}$ and we have approximately

$$\frac{\Delta n}{n} = \frac{Ad^2}{8}$$

where n is the average value of the refractive index. Let us now work out an example e.g. $L = 50\mu$ (layer thickness of medium) $d = 10\mu$, $n = 1.6$, and now find the value of $\Delta n$ required to give the right length to pitch ratio. Evidently
since $L = 0.25P = (0.25)2\pi/\sqrt{A}$ we then have

$$\frac{\Delta n}{n} = \frac{d^2}{8} \frac{(0.25 \times 2\pi)^2}{L^2} = \frac{100}{8} \frac{(0.25 \times 2\pi)^2}{(50)^2} = 0.012$$

which gives a value $\Delta n \approx 0.02$. This result is achievable in practice, for example using a thick layer of a photopolymer such as polyacrylamide (see below).

The compromises discussed here lead to a possible compatible solution to the lenslet problem. The layer must be adequately thick consistent with the available value of $\Delta n$. For the pitch condition $L = 0.25P$ then the acceptance angle is given by

$$\theta = \sin^{-1} \left[ n_{axis} \frac{d}{2} \sqrt{A} \right] = \sin^{-1} \left[ 1.6 \frac{2\pi(0.25)}{2} \frac{1}{5} \right]$$

$$\sin^{-1} \left[ 0.25 \right] = 14°30'$$

This determines the angular acceptance condition for the lenslet at its receiving surface.

Figure 10 illustrates the concept of the acceptance angle, which defines the angular range over which the incoming ray suffers total internal deflection or "trapping".

The equivalent focal length is

$$f = \cfrac{1}{n_{axis} \sqrt{A} \; \sin\left[L\sqrt{A}\right]}$$

but $L = 0.25P = (0.25)2n/\sqrt{A}$

$$\therefore f = \cfrac{1}{n_{axis}\sqrt{A}} \quad = \left(\cfrac{n_{axis}}{\Delta n}\right)^{\frac{1}{2}} \cfrac{d}{\sqrt{8}} \cdot \cfrac{1}{n_{axis}}$$

$$f_{microns} = \cfrac{10}{\left[0.02. \; 1.6\right]^{\frac{1}{2}}\sqrt{8}} \cfrac{10}{\left[1.6. \; 0.16\right]^{\frac{1}{2}}} \approx 20\mu$$

Let us evaluate the quadratic constant A and make comparison with a commercially available SELFOC lens. For our case, we have

$$\sqrt{A} = \sqrt{\cfrac{8\,\Delta n}{nd^2}} = \sqrt{\cfrac{8. \; (0.02)}{1.6 \quad 100}} = 0.032/micron = 32/mm$$

This is to be compared with miniature lenses of the solid fabricated type e.g., L = 5.2 mm, d = 2.0 mm, $\sqrt{A}$ = 0.3/mm. The notable difference is our ability to manufacture a lens with the very high index gradient of the optically generated case as compared with the relatively low value of the solid fabricated case. We can now see that if a wider angle of acceptance is required then since

$$\theta = \sin^{-1}\left(n_{axis} \cfrac{d}{2} \sqrt{A}\right) = \sin^{-1}\left(n_{axis} \cfrac{d}{2} \cfrac{2\pi(0.25)}{L}\right)$$

our only choice is to reduce L but we can only do this if we increase $\Delta n$.
Let us briefly examine the consequences of increasing $\Delta n$ to 0.1. Keeping d at the 10$\mu$ level we could reduce L in the ratio

$$\sqrt{\cfrac{0.02}{0.1}}$$

giving a length L' = 0.44. 50$\mu$ = 22$\mu$.
This then increases the acceptance angle to

$$\theta' = \sin^{-1}\left(n_{axis} \frac{d}{2} \frac{2n\,(0.25)}{L'}\right) = \sin^{-1}\left(1.6 \frac{2n\,(0.25)}{2} \frac{10}{22}\right)$$

$$\approx 45°$$

The effect is thus dramatic.

It may be possible to obtain a significant increase in $\Delta n$ if, after the initial imaging exposure to ultra violet light, the polymer is heated to its softening temperature for a period, before being allowed to cool and subjected to the final "blanketing" exposure to ultraviolet light. It is thought that the heating, by increasing the mobility of molecules in the polymer/-monomer layer, allows further migration of monomer molecules towards the initially exposed and polymerised areas, and thus enhances the process which was commenced by the initial exposure.

The modelling of lenslets outlined in this section is restricted to the known case of the parabolic refractive index distribution but clearly, the ideas are of relevance in more general cases of arbitrary distribution of index. Evidently we only need to produce cylindrical elements with an increasing refractive index towards the centre in order to simulate the results discussed here. The general case of a non parabolic distribution is difficult theoretically but can be tackled as a computational exercise.

Clearly, part of the subtlety of the lenslet problem is the achievement of a focusing effect. Note that this cannot happen when the refractive index is not profiled. Thus a step discontinuity in the refractive index at the edge will only simulate the performance of an optical fibre and the angular distribution with respect to acceptance and emergence will be accordingly limited.

We finally conclude that diffraction around an opaque obstacle such as a small dot should either in direct or complementary form lead to a diffraction pattern that is capable of encoding a cylindrical lenslet of approximately the form described here. The natural Gaussian profile of a laser beam may alternatively be exploited in the case of individual dot recording as with a scanner for example.

As noted above, it is proposed to manufacture the microlens screen by a technique based on exposure through a clear dot mask screen into a material which exhibits variation of refractive index on exposure to light of spatially variable intensity.

The scheme proposed is to use a specially prepared dot screen derived from direct negative production and copy into positive daughters. The screen may, for example, be made from an Eastman Kodak graphic arts plate with an emulsion thickness of approximately two microns. This material is favoured since it is orthochromatic and thin enough to avoid diffraction effects within the mask layer. It is expected that in a production environment the irradiation of the polymeric surface through the screen will be effected by light from a u.v. laser such as an excimer. With such a source we can expect to achieve many watts of u.v. and the ability to expose quickly and efficiently. The other big advantage of the u.v. is the lessening of diffractive effects due to the shorter wavelength ($\approx$ 200 nm).

Irradiation can take place via a collimation system or perhaps using a scanner, as illustrated in Figure 11, in which a laser beam 60 is directed to a mirror 62 which is moved so as to cause the laser beam reflected thereby to scan the layer 64 of monomer, to be selectively polymerised, through the dot mask 66.

Ultra violet is favoured for polymerisation of the photopolymer precursor, because the polymer/monomer is naturally sensitive to the ultra violet. Hence no sensitising dye is required and an absolutely clear polymer layer can be produced, without the need for any bleaching step to bleach out a sensitizer.

The polymer referred to above is, strictly speaking, a polymer only after the imaging exposure which produces, in the method in accordance with the invention, the array of microlenses.

The material is initially in a monomeric form, comprising a viscous fluid which is applied as a coat upon a supporting substrate, upon which it is exposed to the desired dot mask image, in ultraviolet light for a period, as a result of which polymerisation occurs initially in the illuminated areas, with migration of molecules of the monomer towards these areas of polymerisation. Subsequently, the entire coating may be subjected to a "blanketing" exposure to ultra-violet light to polymerise the remainder of the material.

Note that in the irradiation geometry, it is possible to direct the angular arrival of the irradiation and thus to tilt the lenslets 70 according to their position on the screen (72) surface, as illustrated schematically in Figure 12.

The introduction of net optical directivity into the screen is an interesting possible variation in the scheme of things.

It is also contemplated that by using non-profiled dot screens in contact with profiled forms it may be possible to manipulate the light distribution for hot spot removal, for example as illustrated in Figure 13, where reference 74 denotes a simulated glass-fibre screen (in which the fibres extend perpendicular to the screen surface from one face to the other) in contact with a "profiled" graded refactive index microlens screen, both screens being formed as polymer layers. As indicated at 78, guidance of rays, such as ray 80 striking the screen 74 obliquely, is effected by total internal reflection of the ray within the respective cell or simulated optical film, of screen 74.

Note that in all irradiation geometries the direction of the light is important. Diffuse illumination of the contacted system will lead to a scrambling of the microlens image in the depth of the imaging medium.

It is necessary to address the problem of intimacy of contact of the photopolymer layer with the screen through which it is exposed and it is stressed that the polymer can be stuck down on to the mask screen whilst still in its sticky monomeric form. Irradiation will then cross link the polymer and produce a tough peel-off layer which can be transferred to a rigid clear substrate. This self adhesive property is highly advantageous.

It is contemplated that manufacture of microlens screens on a production basis might utilise an endless substrate, for example of smooth plastics sheeting in the form of a conveyor belt which is coated with the monomer, at an upstream end of a working run of the belt, subsequently passes beneath a scanning ultraviolet laser, by means of which the individual "microlens" areas are exposed one by one, over the surface of the material, as it is conveyed onwards, whereafter the conveyor, possibly after passing through a passive area to allow each exposed "microlens" area to "cure" for a period, passes through an oven to raise the temperature of the material to around 100°C, subsequently passes through a cooling region in which it is allowed to cool, then passes through a region where it is subjected to "blanketing" ultraviolet radiation to polymerise the remaining monomer, and finally passes to a station where the polymer is stripped from the substrate and cut transversely into discrete rectangular sheets of the polymer, comprising individual microlens screens.

If desired, the polymer may be sandwiched between upper and lower sheets of transparent plastics, for protection of the polymer.

More specifically, the unexposed fluid monomer may be sandwiched between such transparent sheets prior to exposure to ultra-violet light, and consequent polymerisation, or, alternatively, the exposed sheet of polymer, incorporating the microlenses, may be sandwiched between such plastics sheets, for example with the interposition of a transparent bonding medium, after exposure and polymerisation.

Photopolymers are available, suitable for use in carrying out the invention, which have the additional advantages of being hydrophobic and, in the polymerised form, having good stability under normal domestic ambient conditions so that it is not necessary to maintain rigorously controlled ambient conditions during manufacture, to adopt extreme precautions in handling, nor to provide additional protective layers (although, as indicated above, these may be utilised for other reasons).

It has been found that improved results are obtainable by arranging for the microlens screen to impart a predetermined angular deviation to the light rays passing therethrough, and for the observer to be located along the path of the deviated light so that he views the screen at a substantial angle with respect to the principal optical axis of the projection system. This is preferably achieved by inclining the microlens screen slightly relative to the principal optical axis of the projection system, with the microlenses being arranged to impart the desired deviation. Where graded refractive index lenses (GRINs) are used, as described above, such deviation arises automatically from the nature of the lenses which act, in some respect like fibre-optic devices. In such a system the microlens screen is inclined both with respect to the optical axis of the projection system and to the line of sight of the observer.

The off-axis projection/viewing, as described above has been found to substantially reduce diffraction effects, to afford better colour balance in the image viewed, and substantially to eliminate frontal scattering of light from the microlens screen, affording improved contrast and colour saturation. It will be appreciated that inclination of the microlens screen, relative to the principal axis of the optical projection system presents potentially the problem of a "keystone" effect, which can, however, be eliminated by appropriate modification of the optical system, or by compensatory configuration of the LCD screen, or electronic or constructional compensatory measures applied to a c.r.t. display, where such is used.

A variant of the microlens screen arrangements discussed above may be used to enable a three-dimensional display system to be provided which avoids some of the disadvantages of known systems. Thus, there may be provided a three dimensional display system comprising a light-transmitting sheet incorporating a microlens array, as herein defined, a source, or respective sources, of two optical images, and means arranged to direct light from said sources to said sheet from one side thereof, the arrangement being such that when said sheet is viewed, from the other side thereof, by a person having binocular vision, having his eyes located in predetermined positions or angular orientations with respect to said array, one eye receives light from a first set of said microlenses, constituted by every other microlens in said array, whilst the other eye receives light from a second, complementary set of microlenses, made up by the remaining lenses in the array, the arrangement being such that each eye in consequence perceives a respective one of said two images, within the limits of said screen, whereby, when said two images correspond with the respective images of a three dimensional scene which would be perceived by the two eyes of the person viewing that scene, the person viewing the sheet bearing the microlens array perceives a corresponding three dimensional image in the region of the array.

In an embodiment of the invention incorporating these features, the two image sources comprise respective liquid crystal display screens of the type used in miniature television receivers and which are composed of a large number of individual display units, referred to as pixels. The two LCD screens may be arranged in substantially the same plane, side by side, and facing in the same direction. Mounted in front of the two screens, parallel therewith and at a distance therefrom is a light-transmitting screen bearing an array of microlenses or lenslets, the array sheet and the LCD screens being fixed in position relative to one another. Said light-transmitting screen is herein referred to as the "microlens screen". The microlens screen is centered on, and is normal to, a central axis passing between the two LCD screens and with respect to which the LCD screens are symmetrically disposed. The microlenses or lenslets in the array are so configured that each, typically, combines the effect of a thin prism and a lens proper. That is to say, each lenslet is characterised by a respective angular deflection which it will impart to a ray passing therethrough. Each lenslet may thus be said to be "coded" with a respective deflection angle. Furthermore, alternate microlenses in the array are effectively assigned to different ones of the two LCD screens, so that the microlenses may be regarded as belonging to a first set, assigned to the first LCD screen and including every other microlens in the array, and a second set, assigned to the second LCD screen, and including the remaining, intervening, microlenses in the array. The microlens screen is ideally viewed by an observer with binocular vision, from a predetermined position, such that he is viewing the microlens screen "square on" and is directly facing the screen and at a predetermined distance therefrom. This position is herein referred to as the ideal observer position. The microlenses of the first set are arranged to direct light from respective portions of the first screen to the right eye of an observer located in the ideal observer position whilst the microlenses of the second set are arranged to direct light from the second LCD screen towards the left eye of the observer in the ideal observer position. Expressed in another way, the lenslets are given an angular encoding alternately of a small angle to the left and to the right of the central axis, and the two video images from the two LCD screens are supplied to the microlens array in such a way that they reach the microlens screen at an off-axis angle equivalent to the microlens encoding. The microlens of the first and second set respectively are preferably arranged to direct no light at all to the left and right eye of an observer in the ideal observer position. This may be readily contrived for example, by arranging that the respective optical images presented to the right and left eyes of the observer in the ideal observer position are optical images of matt black areas. This may be done in various ways, for example using a shadow mask interposed between the LCD screens and the microlens screen so that only the microlenses that are at the particular appropriate orientations are addressed by the respective incoming image to either left or right of the central axis.

In consequence of the arrangement described, each eye of the observer located in the ideal observer position will perceive, within the portion of the visual field bounded by the edges of the microlens screen, the image on the first LCD screen with the right eye and the image of the second LCD screen with the left eye. If the images presented by the first and second LCD screens correspond with the views which would be presented to the two eyes of the observer viewing a three dimensional object or scene then the viewer of the microlens screen will perceive a corresponding three dimensional reproduction of the original image or scene. Thus, if the picture content of the first and second LCD screen corresponds substantially with that derived, for example, from respectively first and second TV cameras of a twin-camera device scanning a three dimensional scene and having the lenses of said first and second cameras arranged in a manner corresponding to the arrangement of the two eyes in a human head, then that scene will effectively be viewed in three dimensions by the observer viewing the reproduced images from the ideal observer position.

It will be appreciated that the microlens screen may at the same time present to the respective eyes of the observer enlarged views of the two LCD screens.

It will be appreciated, of course, that the above described 3-D system is not confined to arrangements utilising miniature or LCD screens to provide the image sources. The two image sources might, instead, be provided by two cathode ray tubes, or two film projection screens, for example. However, it is considered that the use of LCD screens in the manner suggested will allow such screens, together with the microlens screen, to be incorporated into a unit no bigger than a conventional television receiver.

Whilst, for ease of description, the operation of the display system has been described in terms of the observer being located in a predetermined position and orientation relative to the microlens screen, it will be appreciated, from a consideration of optics and from psychophysical considerations, that the desired three dimensional effect will be perceptible over a relatively wide range of positions around the ideal observer position, for whilst, in some observer positions other than the ideal position, there may be deficiencies such as the incomplete perception of one or other of the images, or the perception of relatively displaced parts of the two images by one or the other eye of the observer, such deficiencies will not necessarily be particularly prejudicial to the acceptability of the effect.

Whilst, for ease of description, the LCD screens have been described as being located directly behind the microlens screen at some distance therefrom, symmetrically about said central axis of the microlens screen, in practice, there may be interposed between each LCD screen and the microlens screen a respective optical system utilising light folding techniques, for example incorporating mirrors or internally reflecting prisms or the like, and/or lenses, curved mirrors, etc. whereby the LCD screens merely appear, to the microlens screen, to be in the specified locations. Such light folding techniques afford greater latitude in the physical positioning of the LCD screens, (for example in accordance with other design requirements), and allow the apparatus to be made compact in the front-to-back dimension.

It may not be necessary to have complete left and right images provided by the second and first LCD screens or the equivalent. It is possible that, for example, 80% of the image content may be derived from one source and 20% from the other and that a three dimensional effect would still be afforded without using a shadow mask.

In a further variant of the invention, a GRIN microlens screen as described above may have a reflective layer applied to one surface thereof, for example by making the substrate, to which the monomer layer is initially applied before photo polymerisation and which supports the layer of photopolymer in the finished product, of metal foil or of metallised polyester. In this variant the optical imaging system is arranged to direct the light from the LCD or c.r.t. object screen through the photopolymer/microlens layer, to reflect from the metallic or metallised layer and pass through the microlens layer once more towards the viewer. In this arrangement, although the screen as a whole acts as a reflective or front-projection screen, the diffusion effect is obtained, as in the previously described embodiments, by the array of graded refractive index microlenses in the light transmissing polymer layer, and the term "light-transmitting" as used herein in relation to the screen should be interpreted so as to cover the last-noted variant.

It will be appreciated that, in the microlens screens, utilising GRIN microlenses, discussed above, the effect of the screens is a volume effect, rather than a surface effect, and, indeed, the screen surfaces are preferably perfectly flat. Because the proposed microlens screens utilise volume effects in relatively thick layers, it is possible to utilise "light pipe" effects, for example as mentioned in relation to Figures 12 and 13 in addition to straightforward simulation of the effects of conventional lenses, to secure the desired result.

Whilst the embodiments discussed above make reference to television display systems in which a television picture tube or LCD screen affords the object screen of which an image is projected on the microlens screen, it will be understood that the invention may equally be applied to analogous display systems such as microfiche viewers, slide viewers, video display units for computer and other use, and so on.

**Claims**

1. A display system comprising an object screen (41), an image screen and a projection system (40) arranged to project an image of the object screen onto the image screen, the image screen comprising an array of graded refractive index lenses (M), characterised in that said image screen comprises an integral sheet of a transparent photopolymer with each of said lenses being formed by a respective region of said sheet extending between the surfaces of the sheet with the refractive index, in said region, varying gradually with radial distance from the optical axis of each of said lenses.

2. A display system according to claim 1 characterised in that it is a three-dimensional display system, the system including two said object screens each serving as a source of a respective one of two optical images, said projection system being arranged to direct light from said object screens to said sheet, the arrangement being such that when said screen is viewed by a person having binocular vision, having his eyes located in predetermined positions or angular orientations with respect to said array, one eye receives light from a first set of said graded refractive index lenses, constituted by every other said lens in said array, whilst the other eye receives light from a second, complementary set of graded refractive index lenses, made up by the remaining lenses in the array, the arrangement being such that each eye in consequence perceives a respective one of said two images, within the limits of said screen, whereby, when said two images correspond with the respective images of a three dimensional scene which would be perceived by the two eyes of the person viewing that scene, the person viewing the sheet bearing the array of graded refractive index lenses perceives a corresponding three dimensional image in the region of the array.

3. A display system according to claim 1 or claim 2 wherein said image screen is a rear projection screen.

4. A display system according to claim 1 wherein said sheet of transparent photopolymer has a reflective layer fixed to one surface thereof, the projection system being arranged to project light through said sheet of transparent photopolymer to strike said reflective layer and be reflected back through said transparent photopolymer, wherein said image screen is a front projection screen.

5. A display system according to claim 1, wherein said transparent photopolymer comprises polyacrylamide.

6. A method of manufacturing a display system according to claim 1 including the steps of, providing said object screen, providing said projection system, and providing said image screen by a process including applying a layer of a photopolymerisable monomer to a substrate and selectively exposing said layer to ultraviolet light at each of an array of spots over the surface of the layer to cause the monomer to polymerise selectively in such a way as to afford said graded refractive index lenses in a corresponding array, and thereafter subjecting the photopolymer layer to a blanketing exposure to ultraviolet light.

7. A method according to claim 6 wherein, after the selective exposure to ultraviolet light, and before the blanketing exposure, the material of said layer is raised to its softening temperature to enhance the refractive index variation within the regions of the graded refractive index lenses.

8. A method according to claim 6 or claim 7 wherein said selective exposure is effected by exposing the layer to ultraviolet light through a mask in intimate contact with said layer and comprising a clear screen carrying an array of completely opaque dots, or an opaque screen having an array of clear holes, and wherein diffraction effects are utilised to provide a desired variation in exposure across the region of each graded refractive index lens.

9. A method according to claim 6 or claim 7 wherein said selective exposure is effected by exposing the individual lens area of said layer, one by one, to the beam of an ultraviolet laser and utilising the variation in intensity of light throughout the cross-section of the laser beam to provide a desired variation in exposure across the region of each lens.

**Patentansprüche**

1. Vorführrungssystem, das einen Objektschirm (41), einen Abbildungsschirm und ein Projektionssystem (40) in einer Anordnung zum Projizieren eines Abbilds des Objektschirms auf den Abbildungsschirm umfaßt, wobei der Abbildungsschirm eine Gruppierung von Linsen mit abgestuftem Brechungsindex (M) umfaßt, dadurch gekennzeichnet, daß der Abbildungsschirm ein einstückiges Blatt eines transparenten Photopolymers enthält, wobei jede Linse durch einen entsprechenden Bereich des Blatts, der sich zwischen den Oberflächen des Blatts erstreckt, gebildet wird, wobei der Brechungsindex in diesem Bereich sich mit dem radialen Abstand von der optischen Achse einer jeden Linse nach und nach verändert.

2. Vorführrungssystem nach Anspruch 1, dadurch gekennzeichnet, daß es ein dreidimensionales Vorführrungssystem ist, wobei das System zwei Objektschirme enthält, die jeweils als Quelle von einer entsprechenden aus zwei optischen Abbildungen dienen, wobei das Projektionssystem so angeordnet ist, daß es Licht von den Objektschirmen zu dem Blatt lenkt, und die Anordnung solchermaßen ist, daß, wenn der Schirm von einer Person mit binokularem Sehvermögen betrachtet wird, deren Augen sich in vorbestimmten Positionen oder Winkelorientierungen bezüglich der besagten Gruppierung befinden, ein

16

EP 0 294 122 B1

Auge Licht von einem ersten Satz Linsen mit abgestuften Brechungsindex empfängt, der aus jeder zweiten Linse in dieser Gruppierung besteht, während das andere Auge Licht von einem zweiten, komplementären Satz Linsen mit abgestuftem Brechungsindex empfängt, der durch die restlichen Linsen in der Gruppierung gebildet wird, wobei die Anordnung solchermaßen ist, daß jedes Auge ihrzufolge von den zwei Bildern ein entsprechendes innerhalb der Grenzen des Schirms wahrnimmt, wodurch, wenn die zwei Bilder den entsprechenden Bildern einer dreidimensionalen Szenerie entsprechen, die von den zwei Augen der Person wahrgenommen würden, die die Szenerie betrachtet, die Person, die das Blatt betrachtet, das die Gruppierung von Linsen mit abgestuften Brechungsindex trägt, ein entsprechendes dreidimensionales Bild im Bereich der Gruppierung wahrnimmt.

3. Vorführungssystem nach Anspruch 1 oder Anspruch 2, wobei der Abbildungsschirm ein Rückprojektionsschirm ist.

4. Vorführungssystem nach Anspruch 1, wobei das Blatt aus transparentem Photopolymer eine reflektierende Schicht aufweist, die an einer seiner Oberflächen fest angebracht ist, wobei das Projektionssystem so angeordnet ist, daß es Licht durch das Blatt aus transparentem Photopolymer wirft, so daß es auf die reflektierende Schicht einfällt und durch das transparente Photopolymer zurückreflektiert wird, wobei der Abbildungsschirm ein Frontprojektionsschirm ist.

5. Vorführungssystem nach Anspruch 1, wobei das transparente Photopolymer Polyacrylamid enthält.

6. Verfahren zur Herstellung eines Vorführungssystems nach Anspruch 1, welches die Schritte des Vorsehens des Objektschirms, des Vorsehens des Projektionssystems und des Vorsehens des Abbildungsschirms durch einen Vorgang, der es einschließt, eine Schicht eines photopolymerisierbaren Monomers auf ein Substrat aufzubringen und diese Schicht selektiv mit ultraviolettem Licht an jedem Punkt aus einer Gruppierung über der Oberfläche der Schicht zu belichten, um das Monomer zu veranlassen, selektiv in einer Weise zu polimerisieren, daß die Linsen mit abgestuften Brechungsindex in einer entsprechenden Gruppierung gebildet werden, und danach die Photopolymerschicht einer überdeckenden Belichtung mit ultraviolettem Licht zu unterziehen, enthält.

7. Verfahren nach Anspruch 6, wobei nach der selektiven Belichtung mit ultraviolettem Licht und vor der überdeckenden Belichtung das Material der Schicht auf seine Erweichungstemperatur erwärmt wird, um die Variation des Brechungsindex in den Bereichen der Linsen mit abgestuftem Brechungsindex zu erhöhen.

8. Verfahren nach Anspruch 6 oder Anspruch 7, wobei die selektive Belichtung bewirkt wird, indem die Schicht mit ultraviolettem Licht durch eine Maske, die sich in direktem Kontakt mit der Schicht befindet und einen transparenten Schirm, der eine Gruppierung von vollständig lichtundurchlässigen Punkten trägt, oder einen lichtundurchlässigen Schirm mit einer Gruppierung von transparenten Löchern umfaßt, belichtet wird und wobei Beugungseffekte verwendet werden, um eine gewünschte Variation der Belichtung über dem Bereich jeder Linse mit abgestuften Brechungsindex zu ermöglichen.

9. Verfahren nach Anspruch 6 oder Anspruch 7, wobei die selektive Belichtung bewirkt wird, indem nacheinander der Bereich einer individuellen Linse dieser Schicht durch den Strahl eines Ultraviolett-Lasers belichtet wird und indem die Variation der Lichtintensität über dem Querschnitt des Laserstrahls verwendet wird, um eine gewünschte Variation in der Belichtung über dem Bereich jeder Linse zu ermöglichen.

## Revendications

1. Système d'affichage comprenant un écran objet (41), un écran image et un système de projection (40) apte à projeter une image de l'écran objet sur l'écran image, l'écran image comprenant une série de lentilles à indice de réfraction gradué, caractérisé en ce que l'écran image comprend une feuille intégrale d'un photopolymère transparent avec chacune des lentilles constituée par une région respective de la feuille s'étendant entre les surfaces de la feuille avec l'indice de réfraction, dans ladite région, variant progressivement avec la distance radiale à partir de l'axe optique de chacune des lentilles.

17

**2.** Système d'affichage selon la revendication 1, caractérisé en ce qu'il s'agit d'un système d'affichage tridimensionnel, le système comprenant deux écrans objet servant chacun de source à l'une des deux images optiques, le système de projection étant apte à diriger la lumière provenant des écrans objet sur la feuille, l'agencement étant tel que lorsque l'écran est visionné par une personne ayant une vision binoculaire, avec les yeux situés dans les positions prédéterminées ou des orientations angulaires par rapport à la série de lentilles, un oeil reçoit la lumière à partir d'un premier jeu des lentilles à indice de réfraction gradué, constitué par une lentille sur deux dans chaque série tandis que l'autre oeil reçoit la lumière d'un second jeu complémentaire de lentilles à indice de réfraction gradué, constitué par les lentilles restantes de la série, l'agencement étant tel que chaque oeil perçoit en conséquence une image respective parmi les deux images dans les limites de l'écran, de sorte que lorsque deux images correspondent aux images respectives d'une scène tridimensionnelle qui serait perçue par les deux yeux de la personne contemplant cette scène, la personne regardant la feuille portant la série de lentilles à indice de réfraction gradué perçoit une image tridimensionnelle correspondante dans la région de la série de lentilles.

**3.** Système d'affichage selon la revendication 1 ou la revendication 2, dans lequel l'écran image est un écran de projection arrière ou projection par transparence.

**4.** Système d'affichage selon la revendication 1, dans lequel la feuille en photopolymère transparent comporte une couche de réflection fixée sur l'une de ses surfaces, le système de projection étant apte à projeter la lumière à travers la feuille en photopolymère transparent frappant la couche de réflection et étant de nouveau réfléchi à travers le photopolymère transparent, système dans lequel l'écran image est un écran à projection avant.

**5.** Système d'affichage selon la revendication 1, dans lequel le photopolymère transparent comprend du polyacrylamide.

**6.** Procédé de fabrication d'un système d'affichage selon la revendication 1, comprenant les étapes consistant à prévoir un écran objet, prévoir un système de projection et prévoir l'écran image par un procédé consistant à appliquer une couche de monomère photopolymérisable sur un substrat et à exposer sélectivement la couche aux rayons ultraviolets au niveau de chaque série de spots sur la surface de la couche pour faire polymériser le monomère sélectivement de façon à avoir des lentilles à indice de réfraction gradué dans une série correspondante et ensuite à soumettre la couche photopolymère à une exposition voilée aux rayons ultraviolets.

**7.** Procédé selon la revendication 6, dans lequel après l'exposition sélective aux rayons ultraviolets et avant l'exposition voilée, le matériau de la couche est amené à sa température de ramollissement pour augmenter la variation de l'indice de réfraction à l'intérieur des régions des lentilles à indice de réfraction gradué.

**8.** Procédé selon la revendication 6 ou la revendication 7, dans lequel l'exposition sélective s'effectue en exposant la couche aux rayons ultraviolets à travers un masque en contact intime avec la couche et comprenant un écran transparent supportant une série de points complètement opaques ou un écran opaque ayant une série de trous transparents et dans lequel les effets de diffraction servent à donner une variation souhaitée dans l'exposition dans la région de chaque lentille à indice de réfraction gradué.

**9.** Procédé selon la revendication 6 ou la revendication 7, dans lequel l'exposition sélective s'effectue en exposant la zone de lentilles individuelle de la couche une par une aux rayons d'un laser ultraviolet et à utiliser la variation d'intensité de lumière dans toute la section transversale du rayon laser pour donner une variation souhaitée à l'exposition dans la zone de chaque lentille.

**Fig.1.** (prior art)

**Fig.2.**

**Fig.3.**

Fig.4.

$\Delta y'$

$\Sigma$

Fig.5.

55

53

L

0

57

V

Fig.6.

65

57

6

V

*Fig.7.*

*Fig.8.*

*Fig.9.*

Fig.10.

Fig.11.

Fig.12.

Fig.13.